(19) Europäisches Patentamt / European Patent Office / Office européen des brevets

(11) **EP 3 325 554 B1**

(12) **EUROPEAN PATENT SPECIFICATION**

(45) Date of publication and mention
of the grant of the patent:
**27.05.2020  Bulletin 2020/22**

(21) Application number: **16745647.4**

(22) Date of filing: **19.07.2016**

(51) Int Cl.:
**C08L 23/12** *(2006.01)*       **C08L 23/16** *(2006.01)*
**C08K 5/00** *(2006.01)*

(86) International application number:
**PCT/EP2016/067137**

(87) International publication number:
**WO 2017/013096 (26.01.2017 Gazette 2017/04)**

(54) **MOULDED ARTICLES WITH IMPROVED IMPACT/STIFFNESS BALANCE**

FORMARTIKEL MIT VERBESSERTEM VERHÄLTNIS VON STOSSFESTIGKEIT/STEIFIGKEIT

ARTICLES MOULÉS À ÉQUILIBRE IMPACT/RIGIDITÉ AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2015  EP 15177791**

(43) Date of publication of application:
**30.05.2018  Bulletin 2018/22**

(73) Proprietor: **Borealis AG**
**1220 Vienna (AT)**

(72) Inventors:
• **WANG, Jingbo**
  **4209 Engerwitzdorf (AT)**

• **LESKINEN, Pauli**
  **00700 Helsinki (FI)**
• **LILJA, Johanna**
  **06100 Porvoo (FI)**
• **GAHLEITNER, Markus**
  **4501 Neuhofen/Krems (AT)**

(74) Representative: **Lux, Berthold**
**Maiwald Patentanwalts- und
Rechtsanwaltsgesellschaft mbH
Elisenhof
Elisenstraße 3
80335 München (DE)**

(56) References cited:
**EP-A1- 1 935 938     WO-A2-2013/050384**

## Description

The present invention relates to moulded articles, preferably injection moulded articles having an improved impact/stiffness balance, whereby the articles comprise a specific heterophasic polypropylene composition.

## Background

There is an increasing market need for light-weight consumer packaging which can be manufactured with lower wall thicknesses, since it allows for energy and material savings. In order to provide a material equipped with these features, a highly stiff material with good impact properties needs to be developed. The high stiffness enables lower wall thicknesses of a packaging article.

However, the impact performance which determines application performance like falling weight impact strength must be maintained on a high level. Additionally, the materials should show high flowability. Otherwise, injection moulding of articles with a low wall thickness is not possible. High flow materials generally show high stiffness due to shorter polymer chains of high stereoregularity and faster crystallization. However, the impact performance becomes reduced due to shorter polymer chains which form less entanglements. Thus, the challenge is to obtain a material combining high flowability and stiffness and good impact performance.

There is particularly the need for propylene polymer compositions being suitable for preparing moulded articles, preferably injection moulding articles, especially for thin wall injection moulding applications, which fulfil the above described requirements.

However, at least some of these requirements may only be achieved at the expense of others of these objects. For instance with increase of melt flow rate the stiffness can be improved, however the impact properties significantly drop. Thus impact behaviour and melt flow of a polymer behave in a conflicting manner.

It is known that impact strength of polypropylene can be improved by dispersing a rubber phase within the polymer matrix, thereby obtaining a heterophasic polypropylene composition.

Such heterophasic propylene copolymers comprise a matrix being either a propylene homopolymer or a random propylene copolymer in which an amorphous phase, which contains a propylene copolymer rubber (elastomer), is dispersed. Thus the polypropylene matrix contains (finely) dispersed inclusions not being part of the matrix and said inclusions contain the elastomer. The term inclusion indicates that the matrix and the inclusion form different phases within the heterophasic propylene copolymer, said inclusions are for instance visible by high resolution microscopy, like electron microscopy or scanning force microscopy or atomic force microscopy, or by dynamic mechanical thermal analysis (DMTA). Further the heterophasic polypropylene may contain to some extent a crystalline polyethylene, which is a by-reaction product obtained by the preparation of the heterophasic propylene copolymer. Such crystalline polyethylene is present as inclusion of the amorphous phase due to thermodynamic reasons.

Many different types of heterophasic systems have already been described depending on the individual desire and end-uses.

Nevertheless there is still a need for moulded articles comprising a heterophasic polypropylene composition, which show an improved impact/stiffness balance and are especially suitable for thin wall injection moulded applications.

It is therefore an object of the present invention to provide a moulded article with such an improved impact/stiffness balance, particularly an injection moulded article, like a thin wall injection moulded article.

## Summary of the Invention

The present invention is based on the finding that the above-mentioned objects can be achieved by moulded article comprising a particular heterophasic polypropylene composition.

Accordingly the present invention is directed to a moulded article comprising a heterophasic polypropylene composition comprising

(A) 68 to 90 wt% of a crystalline isotactic propylene homopolymer matrix having a pentad concentration as determined by $^{13}$C-NMR spectroscopy of more than 96 mol% and a matrix melt flow rate ($MFR_M$) as determined at 230°C and 2.16 kg load according ISO 1133 in the range of 20 to 600 g/10min,

(B) 10 to 32 wt% of a predominantly amorphous propylene copolymer with 28 to 50 wt% of ethylene and/or an $\alpha$-olefin with 4-10 carbon atoms, being present in the composition as dispersed particles, and

(C) 0 to 5.0 wt% of a crystalline ethylene copolymer with an $\alpha$-olefin with 3-10 carbon atoms being present in the composition as inclusions of the dispersed particles of (B),

(D) 0 to 1.0 wt% of an alpha nucleating agent for the $\alpha$- and/or $\gamma$-phase of isotactic polypropylene,

said composition being further characterized by a total melt flow rate ($MFR_T$) as determined at 230°C and 2.16 kg load according ISO 1133 in the range of 6.0 to 200 g/10min, a fraction soluble in xylene (XCS) determined at 25°C according ISO 16152 in the range of 15 to 35 wt%, and ratio of $MFR_T/MFR_M$ of $\leq 1.0$,
whereby the sum of the percentage amounts of the individual components of the composition is equal to 100 percent, and
whereby the moulded article fulfils the following in-equation of formula (I)

$$TL > 3400 - 1293 \times DH + 383 \times DH^2 - 38 \times DH^3,$$

wherein

TL is the top load force [N] measured according to DIN 55526 on empty 10 litre pails produced by injection moulding and
DH is the drop height [m] measured according to the test method as described in the experimental part.

In an embodiment of the present invention, the moulded article comprising the heterophasic polypropylene composition is free of phthalic acid esters as well as their respective decomposition products; preferably the moulded article comprising the heterophasic polypropylene composition is free of phthalic compounds as well as their respective decomposition products.
According to the present invention the term "phthalic compounds" refers to phthalic acid (CAS No. 88-99-3), its mono- and diesters with aliphatic, alicyclic and aromatic alcohols as well as phthalic anhydride.

It has surprisingly found that a moulded article in which the heterophasic propylene copolymer (HECO) is the main component is featured by very good stiffness/impact balance.

Therefore in one specific embodiment the present invention is directed to an injection moulded article, like a thin wall packaging element, comprising the above defined heterophasic propylene copolymer (HECO). More preferably the present invention is directed to a thin wall packaging element being an open-top container with an overall volume of 1.0 to 25 litres, optionally in combination with a close-fitting lid for said container.

As used herein the term "moulded article" is intended to encompass articles that are produced by any conventional moulding technique, e.g. injection moulding, blow moulding, stretch moulding, compression moulding, roto-moulding or injection stretch blow moulding.

The term is not intended to encompass articles that are produced by casting or extrusion. Thus the term is not intended to include films or sheets.
Preferably the moulded article is an article that is produced by injection moulding.

In the following the invention is described in more detail.

The amount of the heterophasic propylene copolymer (HECO) in the moulded article, preferably in the injection moulded article is at least 60 wt%, more preferably at least 70 wt%, still more preferably at least 90 wt%, yet more preferably at least 95 wt%, like 95 to 100 wt%. It is especially preferred that the heterophasic propylene copolymer (HECO) is the only polymer in the moulded article, preferably in the injection moulded article. Accordingly, in an especially preferred embodiment the instant moulded article, preferably in the injection moulded article consists of the heterophasic propylene copolymer (HECO).

Furthermore the present invention is also directed to thin wall packaging elements, like thin wall packaging elements produced by injection moulding, comprising at least 70 wt%, more preferably at least 90 wt%, yet more preferably at least 95 wt%, still more preferably consisting of the heterophasic propylene copolymer (HECO) as defined herein.

The thin wall packaging elements, like thin wall packaging elements produced by injection moulding, preferably have a wall thickness of equal or below 5.0 mm, preferably in the range of 0.2 to 4.0 mm, more preferably in the range of 0.3 to 3.0 mm.

Said thin wall packaging elements are preferably produced by injection moulding. Further the thin wall packaging element is preferably an open-top container with an overall volume of 1.0 to 25 litres, optionally in combination with a close-fitting lid for said container.
Examples for such containers are boxes for transportation and storage, trays, pails, buckets, bowls and the like.
The containers can be of round, oval, rectangular, square or irregular shape in vertical projection and may be collapsible or foldable, but also stackable.

The moulded article, preferably in the injection moulded article is featured by a melt flow rate $MFR_2$ (230 °C) in the range of 6.0 to 200.0 g/10min, preferably in the range of 6.5 to 180 g/10 min and more preferably in the range of 7.0 to 160 g/10 min

It is also preferred that the moulded article, preferably in the injection moulded article is thermo-mechanically stable.

Accordingly it is appreciated that the moulded article, preferably in the injection moulded article has a melting temperature of at least 160 °C, more preferably of at least 162°C, still more preferably in the range of 163 to 170 °C.

The xylene cold soluble (XCS) fraction measured according to ISO 16152 (25°C) of the moulded article, preferably in the injection moulded article is in the range of 15.0 to 35.0 wt%, preferably in the range from 16.0 to 30.0 wt% and more preferably in the range from 18.0 to 28.0 wt%.

In one preferred embodiment the moulded article, preferably in the injection moulded article is featured by an improved impact/stiffness balance.

The impact performance of the moulded article, preferably the injection moulded article is tested with the drop height test

Such drop tests are done at room temperature (23°C) with water filled 10 litre pails produced by injection moulding and closed with a snap-fitting lid. The pails are lifted to certain height and then dropped down. If the pail does not collapse, the height is increased by 10 cm and the procedure is repeated. If the pail collapses, the height will be reduced by 10 cm. The drop height is calculated using the formula below:

$$drop\ height = \frac{\sum number\ of\ pails@certain\ height\ x\ height}{total\ number\ of\ tested\ pails}$$

Thus, the moulded article, preferably in the injection moulded article according to the present invention shows a drop height at 23°C of at least 1.0 m, preferably of 1.2 m to 6.0 m, more preferably of 1.5 m to 5.0 and yet more preferably from 1.7 m to 4.5 m.

The stiffness performance of the moulded article, preferably the injection moulded article is tested with the top load test measured according to DIN 55526 on empty 10 litre pails produced by injection moulding.

The pail (test specimen) is compressed at 23°C in an upright position between two parallel compression plates with constant speed, recording the resulting force and the distance (traverse path). A pre-force of -10 N is applied at 1 mm/min in order to achieve a rather linear force/deformation curve, followed by compression testing at 10 mm/min. The test is limited to the range of reversible deformation and will be stopped after a deformation of 3.5 mm. 5 specimens are tested and the resulting maximum top load force is averaged.

Thus, the moulded article, preferably in the injection moulded article according to the present invention shows a top load force of at least 1900 N, preferably at least 1920 N up to 3500 and more preferably 1950 N up to 3000 N.

The moulded article, preferably in the injection moulded article according to the present invention has to fulfil the following in-equation of formula (I)

$$TL > 3400 - 1293xDH + 383xDH^2 - 38xDH^3,$$

wherein

TL is the top load force [N] measured according to DIN 55526 on empty 10 litre pails produced by injection moulding and

DH is the drop height [m] measured according to the test method as described in the experimental part.

Moulded articles, preferably the injection moulded articles fulfilling this in-equation show the desired improved or excellent impact/stiffness balance.

As stated above this improved or excellent impact/stiffness balance is achieved by using the special heterophasic propylene copolymer (HECO).

Thus the special heterophasic propylene copolymer (HECO) will be now described in more detail:

The particular heterophasic polypropylene composition being used in the present invention comprises at least component (A) and component (B) and optionally also components (C) and (D).

*Ad component (A):*

Component (A) of the particular heterophasic polypropylene composition is a crystalline isotactic propylene homopolymer forming the matrix of the heterophasic polypropylene composition.

The expression homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable.

The propylene homopolymer matrix is isotactic having a high pentad concentration, i.e. higher than 96 mol%, like a pentad concentration of at least 96.3 mol%. The pentad concentration is preferably 96.5 mol% up to 99.9% and more preferably 96.7 mol% to 99.8%.

The propylene homopolymer matrix has a melt flow rate $MFR_2$ (ISO 1133; 230 °C; 2.16kg) in the range of 20.0 to 600 g/10 min, preferably in the range of 25.0 to 550 g/10 min and more preferably in the range of 30.0 to 500 g/10 min. The $MFR_2$ of the matrix is named matrix melt flow rate ($MFR_M$).

Moreover it is preferred that the amount of xylene solubles of propylene homopolymer matrix is not too high. Xylene solubles are the part of the polymer soluble in cold xylene determined by dissolution in boiling xylene and letting the insoluble part crystallize from the cooling solution (determined at 25°C according to ISO 16152). The xylene solubles fraction contains polymer chains of low stereo-regularity and is an indication for the amount of non-crystalline areas. Accordingly it is preferred that the xylene solubles fraction of the propylene homopolymer matrix is in the range of 0.5 wt% to 5.0 wt%, more preferably in the range of 0.7 wt% to 4.0 wt%. In an even more preferred embodiment the xylene solubles fraction is in the range of 1.0 wt% to 3.5 wt%.

The propylene homopolymer has a melting temperature $T_{m1}$ and a melting enthalpy $H_{m1}$ as determined by DSC analysis according to ISO 11357.

Preferably, $T_{m1}$ of the propylene homopolymer is within the range of 160°C to 170°C, more preferably within the range of 161°C to 169°C and most preferably within the range of 162°C to 168°C

Preferably, $H_{m1}$ of the propylene homopolymer is in the range of 70 J/g to 100 J/g, more preferably in the range of 70 J/g to 95 J/g and most preferably within the range of 70 J/g to 92 J/g.

The propylene homopolymer matrix can be unimodal or multimodal, like bimodal.

Preferably the propylene homopolymer matrix is multimodal, especially bimodal.

Concerning the definition of unimodal and multimodal, like bimodal, it is referred to the definition below.

Where the propylene homopolymer matrix comprises two or more different propylene polymers these may be polymers with different monomer make up and/or with different molecular weight distributions. These components may have identical or differing monomer compositions and tacticities.

When the propylene homopolymer matrix phase is unimodal with respect to the molecular weight distribution, it may be prepared in a single stage process e.g. a slurry or gas phase process in a slurry or gas phase reactor. Preferably, a unimodal matrix phase is polymerized as a slurry polymerization. Alternatively, the unimodal matrix may be produced in a multistage process using at each stage process conditions which result in similar polymer properties.

The propylene homopolymer matrix, if it is of multimodal or bimodal character, can be produced by blending different polymer types, i.e. of different molecular weight and/or comonomer content. However in such a case it is preferred that the polymer components of the polypropylene matrix are produced in a sequential step process, using reactors in serial configuration and operating at different reaction conditions. As a consequence, each fraction prepared in a specific reactor will have its own molecular weight distribution and/or comonomer content distribution.

When the distribution curves (molecular weight or comonomer content) from these fractions are superimposed to obtain the molecular weight distribution curve or the comonomer content distribution curve of the final polymer, these curves may show two or more maxima or at least be distinctly broadened when compared with curves for the individual fractions. Such a polymer, produced in two or more serial steps, is called bimodal or multimodal, depending on the number of steps.

*Ad component (B):*

Component (B) of the particular heterophasic polypropylene composition is a predominantly amorphous propylene copolymer being present in the composition as dispersed particles. (i.e. dispersed phase)

Suitable comonomers for the propylene copolymer are ethylene and/or $\alpha$-olefins with 4-10 carbon atoms. Suitable $C_4$ - $C_{10}$ $\alpha$-olefins are 1-butene, 1-pentene, 1-hexene, 1-heptene and 1-octene. Preferably the component (B) is a copolymer of propylene and ethylene.

The amount of ethylene and/or $\alpha$-olefins with 4-10 carbon atoms in component (B) is in the range of 28 to 50 wt%, preferably in the range of 30 to 48 wt% and more preferably in the range of 32 to 46 wt%.

Like the propylene homopolymer matrix, the dispersed phase can be unimodal or multimodal, like bimodal.

In one embodiment, the dispersed phase is unimodal. More particularly, the dispersed phase is preferably unimodal in view of the intrinsic viscosity and/or the comonomer distribution. Concerning the definition of unimodal and multimodal, like bimodal, it is referred to the definition above.

*Ad component (C)*

As component (C) a crystalline ethylene copolymer with an $\alpha$-olefin with 3-10 carbon atoms is optionally present. $\alpha$-olefins with 3-10 carbon atoms are for example propylene, 1-butene, 1-pentene, 1-hexene, 1-heptene and 1-octene.

The crystalline ethylene copolymer is a by-reaction product obtained by the preparation of the heterophasic polypropylene composition. Such crystalline ethylene copolymer is present as inclusion in the amorphous phase due to thermodynamic reasons.

The crystalline ethylene copolymer has a melting temperature $T_{m2}$ and a melting enthalpy $H_{m2}$ as determined by DSC analysis according to ISO 11357.

Preferably, $T_{m2}$ of the crystalline ethylene copolymer is within the range of 105°C to 130°C, more preferably within the range of 110°C to 127°C and most preferably within the range of 112°C to 124°C

Preferably, $H_{m2}$ of the crystalline ethylene copolymer is less than 7.0 J/g, more preferably less than 3.5 J/g and most preferably less than 2.5 J/g.

*Ad component (D)*

As component (D) an alpha nucleating agent for the $\alpha$- and/or $\gamma$-phase of isotactic polypropylene is optionally present.

It is well known that different types of crystal nucleating agents will affect the crystal structure of the polymer differently, enhancing the presence and relative amounts of specific crystal modifications of isotactic polypropylene, like the monoclinic $\alpha$-modification, the pseudo-hexagonal $\beta$-modification and the orthorhombic $\gamma$-modification.

While the polymer structure will affect the degree of expression of a specific nucleation, the type of crystal formed will be determined by the nucleating agent.

The alpha-nucleating agent (D), if present, is usually added in small amounts of 0.0001 to 1.0 wt%, preferably from 0.0005 to 0.8 wt% and more preferably from 0.001 to 0.5 wt%.

The $\alpha$-nucleating agent (D) may be any compound which acts as nucleating agent for the monoclinic $\alpha$-modification and/or orthorhombic $\gamma$-modification of polypropylene.

Generally speaking, two classes of $\alpha$-nucleating agents can be distinguished, namely particulate nucleating agents and soluble nucleating agents.

Particulate nucleating agents show a conventional dispersion mechanism for which particle size and polarity difference to the polymer are decisive. Examples of this class are inorganic nucleating agents like talc, but also organic nucleating agents like sodium benzoate, organophosphates and salts of p-tert-butyl benzoic acid, as well as polymeric nucleating agents like polymerized vinyl compounds such as polyvinylcyclohexane or polytetrafluoroethylene. Further details about these nucleating agents can be found e.g. in WO 99/24479 and WO 99/24501.

Soluble nucleating agents are those with a sequence of dissolution upon heating and recrystallisation upon cooling defining the degree of dispersion. In the latter case, solubility and the resulting crystal shape are decisive for the efficiency. Examples of this class are nucleating agents like sorbitol derivatives, e.g. di(alkylbenzylidene)sorbitols as 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide.

However, in case the heterophasic polypropylene composition comprises an $\alpha$-nucleating agent, the heterophasic polypropylene composition preferably has a crystallization temperature being above the crystallization temperature of the non-nucleated heterophasic polypropylene composition, whereby the crystallization temperature of the nucleated heterophasic polypropylene composition is more than 120°C as determined by DSC analysis according ISO 11357.

*Ad heterophasic composition*

The heterophasic polypropylene composition of the present inventions is further characterized by a total melt flow rate ($MFR_T$) (ISO 1133; 230 °C; 2.16kg) in the range of 6.0 to 200 g/10 min, preferably in the range of 6.5 to 180 g/10 min and more preferably in the range of 7.0 to 160 g/10 min.

The ratio of the total melt flow rate of the heterophasic polypropylene composition to the propylene homopolymer matrix melt flow rate $MFR_T/MFR_M$ is $\leq$ 1.0.

Preferably the ratio $MFR_T/MFR_M$ is in the range of 0.2 to 0.75, more preferably in the range of 0.2 to 0.5.

The final total melt flow rate of the heterophasic polypropylene composition can be achieved either directly by a sequential multi-reactor polymerization process, as described later or by visbreaking with peroxide, as will be described later.

A heterophasic polypropylene composition prepared by a sequential multi-reactor polymerization process with subsequent visbreaking has a propylene homopolymer matrix with a matrix melt flow rate $MFR_M$ of at least 20 g/10 min (ISO 1133; 230 °C; 2.16kg) and an initial total melt flow rate before visbreaking $MFR_R$ of 5.0 to 100 g/10 min.

The xylene cold soluble (XCS) fraction measured according to according ISO 16152 (25°C) of the heterophasic polypropylene composition is in the range from 15.0 to 35.0 wt%, preferably in the range from 16.0 to 32.0 wt% and more preferably in the range from 18.0 to 28.0 wt%.

Further it is appreciated that the xylene cold soluble (XCS) fraction of the heterophasic polypropylene composition is specified by its intrinsic viscosity.

For the present invention it is appreciated that the xylene cold soluble fraction (XCS) of the heterophasic polypropylene composition has an intrinsic viscosity (iV) measured according to ISO 1628/1 (at 135°C in decalin) in the range of 1.8 to below 5.0 dl/g, preferably in the range of 2.0 dl/g to 4.5 dl/g and more preferably in the range of 2.1 dl/g to below 4.0 dl/g.

Additionally it is preferred that the comonomer content, preferably ethylene content, of the xylene cold soluble (XCS) fraction of the heterophasic polypropylene composition is in the range of 30.0 to 52.0 wt%, preferably in the range of 31.0 to 50.0 wt%, and more preferably in the range of 32.0 to 49.0 wt%.

The comonomers present in the xylene cold soluble (XCS) fraction are those defined above for the propylene copolymer (component B). In one preferred embodiment the comonomer is ethylene only.

It is also appreciated that the total content of the comonomers, i.e. the sum of content of ethylene and $\alpha$-olefins with 4 to 10 C-atoms, in the total heterophasic polypropylene composition is rather moderate.

Accordingly it is preferred that the heterophasic polypropylene composition has a total comonomer content, preferably ethylene content, in the range of 5.0 to 18.0 wt%, preferably in the range of 6.0 to 15.0 wt% and more preferably in the range of 6.5 to 13.0 wt%.

Furthermore the inventive heterophasic polypropylene composition has at least a first glass transition temperature $T_g(1)$ and a second glass transition temperature $T_g(2)$, wherein said first glass transition temperature $T_g(1)$ is above the second glass transition temperature $T_g(2)$. The glass transition temperature $T_g$ is determined by dynamic mechanical thermal analysis (DMTA) according to ISO 6721-7.

Accordingly the heterophasic polypropylene composition has a first glass transition temperature $T_g(1)$ in the range of -4 to +4°C and/or a second glass transition temperature $T_g(2)$ in the range of -65 to -45°C.

The multiphase structure of the heterophasic polypropylene composition (predominantly amorphous propylene copolymer dispersed in the matrix) can be identified by the presence of at least two distinct glass transition temperatures. The higher first glass transition temperature ($T_g(1)$) represents the matrix, i.e. the crystalline polypropylene homopolymer, whereas the lower second glass transition temperature ($T_g(2)$) reflects the predominantly amorphous propylene copolymer of the heterophasic polypropylene composition.

Preferably the first glass transition temperature $T_g(1)$ is in the range of -3 to +3°C, more preferably in the range of -2 to +2°C.

The second glass transition temperature $T_g(2)$ is preferably in the range of -62 to -48°C, more preferably in the range of -60 to -50°C.

The heterophasic polypropylene composition of the present invention has a puncture energy (23°C) as determined in the instrumental falling weight (IFW) test according to ISO 6603-2 using injection moulded plaques of 60x60x2 mm at +23 °C and a test speed of 2.2 m/s of at least 20 J. The puncture energy (23°C) is preferably in the range of 20 to 50 J and more preferably in the range of 20 to 45 J.

Furthermore the heterophasic polypropylene composition of the present invention preferably fulfils the inequation

$$\text{Puncture Energy (23°C)} > 80 - 20*iV(XCS)$$

wherein iV(XCS) is the intrinsic viscosity of the XCS fraction as measured according to DIN ISO 1628/1 in decalin at 135 °C.

The Charpy notched impact strength of the heterophasic polypropylene composition at 23°C as measured according to ISO 179-1eA is in the range of 2.0 to 35.0 kJ/m$^2$, preferably in the range of 2.5 to 30.0 kJ/m$^2$ and more preferably in the range of 3.0 to 25.0 kJ/m$^2$.

The Charpy notched impact strength of the heterophasic polypropylene composition at -20°C as measured according to ISO 179-1 eA is preferably in the range of 1.5 to 10.0 kJ/m$^2$, preferably in the range of 1.6 to 9.0 kJ/m$^2$ and more preferably in the range of 1.7 to 8.5 kJ/m$^2$.

In a preferred embodiment the heterophasic polypropylene composition is preferably free of phthalic acid esters as well as their respective decomposition products, i.e. phthalic acid esters, typically used as internal donor of Ziegler-Natta catalysts used for its production. Preferably, the heterophasic polypropylene composition is free of phthalic compounds as well as their respective decomposition products, i.e. phthalic compounds typically used as internal donor of Ziegler-Natta catalysts.

The term "free of" phthalic acid esters, preferably phthalic compounds, in the meaning of the present invention refers to a heterophasic polypropylene composition in which no phthalic acid esters as well no respective decomposition products, preferably no phthalic compounds as well as no respective decomposition products at all originating from the Ziegler-Natta catalyst are detectable.

The heterophasic polypropylene composition of the present invention is composed of components (A) and (B) and optional components (C) and (D).

Component (A) is present in an amount of from 68 to 90 wt%, preferably from 70 to 87 wt% and more preferably from 72 to 86 wt%

Component (B) is present in an amount of from 32 to 10 wt%, preferably from 30 to 12 wt% and more preferably from 26 to 14 wt%.

Component (C) is present in an amount of from 0 to 10 wt%, preferably from 0.5 to 7.0 wt% and more preferably from 0.8 to 5.0 wt%.

Component (D) is present in an amount of from 0 to 1.0 wt%, preferably from 0 to 0.8 wt% and more preferably from 0 to 0.5 wt%.

The sum of fractions (A), (B), (C) and (D) is 100 wt% or lower depending on the presence of further fractions or additives. The ranges in percent by weight (wt%) as used herein define the amount of each of the fractions or components based on the entire heterophasic polypropylene composition according to the present invention. All fractions and components together give a sum of 100 wt.

The heterophasic polypropylene composition according to the present invention apart from the polymeric components and the $\alpha$-nucleating agent (D) may comprise further non-polymeric components, e.g. additives for different purposes.

The following are optional additives: process and heat stabilisers, pigments and other colouring agents, antioxidants, antistatic agents, antiblocking agents, slip agents, UV stabilisers and acid scavengers.

Depending on the type of additive, these may be added in an amount of 0.001 to 2.0 wt%, based on the weight of the heterophasic polypropylene composition.

***Preparation of the heterophasic polypropylene composition***

The heterophasic polypropylene composition can be produced in a multistage process comprising at least two reactors connected in series, wherein the polypropylene homopolymer matrix (A) is produced first and in a subsequent step the propylene copolymer (B) is produced in the presence of the matrix (A) or by blending the matrix polymer (A) with the propylene copolymer (B) after their polymerization.

However, more desirably, the heterophasic polypropylene composition is produced in a multistage process.

In a particular preferred embodiment the polypropylene homopolymer matrix (A) is produced in at least one slurry reactor and subsequently the propylene copolymer (B) is produced in at least one gas phase reactor.

Accordingly the heterophasic polypropylene composition of the instant invention can be typically produced in a cascade of at least 2 reactors up to 3 reactors with an optional 4th reactor, where the first reactor is a liquid bulk reactor preferably of loop design and all subsequent reactors are gas phase reactors, preferably of fluidized bed design.

Preferably the components produced in the first two reactors are crystallizable propylene homopolymers (obtaining the matrix), while the component produced in the third reactor is a predominately amorphous copolymer with higher amounts of comonomer. Optionally a further component can be produced in the fourth reactor, which is either also a predominately amorphous copolymer or a crystalline ethylene homo- or copolymer. According to a specific embodiment, only three reactors are utilized with either the second reactor being bypassed or the fourth reactor not being utilized.

According to another specific embodiment, only the first and the third reactor are utilized.

It is preferred that

(a) in a first reactor propylene is polymerized obtaining a first propylene homopolymer fraction,

(b) transferring said first propylene homopolymer fraction in a second reactor,

(c) polymerizing in said second reactor in the presence of the first propylene homopolymer fraction further propylene obtaining a second propylene homopolymer fraction, said first propylene homopolymer fraction and said second propylene homopolymer fraction form the matrix (A),

(d) transferring said matrix (A) in a third reactor,

(e) polymerizing in said third reactor in the presence of the matrix (A) propylene and ethylene and/or $C_4$ to $C_{10}$ $\alpha$-olefin obtaining an predominantly amorphous propylene copolymer (B), said matrix (A) and said predominantly amorphous propylene copolymer (B) form the heterophasic polypropylene composition.

By using - as stated above - a loop reactor and at least one gas phase reactor in serial configuration and working at different conditions, a multimodal (e.g. bimodal) propylene homopolymer matrix (A) can be obtained.

The first reactor is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

The second reactor and the third reactor are preferably gas phase reactors. Such gas phase reactors can be any mechanically mixed or fluid bed reactors. Preferably the gas phase reactors comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor is a slurry reactor, like loop reactor, whereas the second reactor and the third reactor are gas phase reactors. Accordingly for the instant process at least three, preferably three polymerization reactors, namely a slurry reactor, like loop reactor, a first gas phase reactor and a second gas phase reactor are connected in series are used. If needed prior to the slurry reactor a pre-polymerization reactor is placed.

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic polypropylene composition as defined above the conditions for the first reactor, i.e. the slurry reactor, like a loop reactor, may be as follows:

- the temperature is within the range of 50°C to 110°C, preferably between 60°C and 100°C, more preferably between 68 and 95°C,
- the pressure is within the range of 20 bar to 80 bar, preferably between 40 bar and 70 bar,
- hydrogen can be added for controlling the molar mass in a manner known per se.

Subsequently, the reaction mixture of the first reactor is transferred to the second reactor, i.e. gas phase reactor, where the conditions are preferably as follows:

- the temperature is within the range of 50°C to 130°C, preferably between 60°C and 100°C,
- the pressure is within the range of 5 bar to 50 bar, preferably between 15 bar and 35 bar,
- hydrogen can be added for controlling the molar mass in a manner known per se.

The condition in the third reactor is similar to the second reactor.

The residence time can vary in the three reactor zones.

In one embodiment of the process for producing the heterophasic polypropylene composition the residence time in bulk reactor, e.g. loop is in the range 0.1 to 3.5 hours, e.g. 0.15 to 3.0 hours and the residence time in gas phase reactor will generally be 0.2 to 6.0 hours, like 0.5 to 5.0 hours.

If desired, the polymerization may be effected in a known manner under supercritical conditions in the first reactor, i.e. in the slurry reactor, like in the loop reactor, and/or as a condensed mode in the gas phase reactors.

Preferably, the process comprises also a prepolymerization step with the catalyst system, as described in detail below, comprising a Ziegler-Natta procatalyst, an external donor and optionally a cocatalyst.

In a preferred embodiment, the prepolymerization step is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60°C, preferably from 15 to 50°C, and more preferably from 20 to 45°C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic polypropylene composition is obtained by a multistage polymerization process, as described above, in the presence of a catalyst system.

As pointed out above in the specific process for the preparation of the heterophasic polypropylene composition as defined above, a specific Ziegler-Natta catalyst must be used.

Accordingly, the Ziegler-Natta catalyst will be now described in more detail.

The catalyst used in the present invention is a solid Ziegler-Natta catalyst, which comprises compounds of a transition metal of Group 4 to 6 of IUPAC, like titanium, a Group 2 metal compound, like a magnesium, and an internal donor being preferably a non-phthalic compound, more preferably a non-phthalic acid ester, still more preferably being a diester of non-phthalic dicarboxylic acids as described in more detail below. Thus, the catalyst is fully free of undesired phthalic compounds. Further, the solid catalyst is free of any external support material, like silica or MgCl2, but the catalyst is self-supported.

The Ziegler-Natta catalyst (ZN-C) can be further defined by the way as obtained.

Accordingly, the Ziegler-Natta catalyst (ZN-C) is preferably obtained by a process comprising the steps of

a)

$a_1$) providing a solution of at least a Group 2 metal alkoxy compound (Ax) being the reaction product of a Group 2 metal compound and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound and the monohydric alcohol (B), optionally in an organic liquid reaction medium; or

$a_4$) providing a solution of Group 2 alkoxide of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m ≠ 0, $0 < n' \leq 2$ and $0 < m' \leq 2$; and

b) adding said solution from step a) to at least one compound of a transition metal of Group 4 to 6 and
c) obtaining the solid catalyst component particles,
and adding an internal electron donor, preferably a non-phthalic internal donor, at any step prior to step c).

The internal donor or precursor thereof is added preferably to the solution of step a).

According to the procedure above the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound in step b) is carried out and the whole reaction mixture is kept at least at 50°C, more preferably in the temperature range of 55°C to 110°C, more preferably in the range of 70°C to 100°C, to secure full precipitation of the catalyst component in form of a solid particles (step c).

In emulsion - solidification method in step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx).

Preferably the Group 2 metal is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propyleneglycol-monobutyl ether, 3-butoxy-2-propanol being particularly preferred.

Illustrative monohydric alcohols (B) are of formula ROH, with R being straight-chain or branched $C_6$-$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"(OH)$_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt% solution in a solvent as indicated above. Typical commercially available Mg compound, especially dialkyl magnesium solutions are 20 - 40 wt% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The non-phthalic internal donor used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 g/m$^2$, more preferably below 10 g/m$^2$. Typically the amount of Ti is 1 to 6 wt%, Mg 10 to 20 wt% and donor 10 to 40 wt% of the catalyst composition.

Detailed description of preparation of catalysts is disclosed in WO 2012/007430, EP2610271, EP 261027 and EP2610272 which are incorporated here by reference.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are $(tert-butyl)_2Si(OCH_3)_2$, $(cyclohexyl)(methyl)Si(OCH_3)^2$, $(phenyl)_2Si(OCH_3)_2$ and $(cyclopentyl)_2Si(OCH_3)_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally
(b) the mol-ratio of co-catalyst (Co) to titanium compound (TC) [Co/TC] must be in the range of above 80 to 500, preferably is in the range of 100 to 350, still more preferably is in the range of 120 to 300.

The heterophasic polypropylene composition according to this invention is preferably produced in the presence of

(a) a Ziegler-Natta catalyst comprising compounds (TC) of a transition metal of Group 4 to 6 of IUPAC, a Group 2 metal compound and an internal donor, wherein said internal donor is a non-phthalic compound, preferably is a non-phthalic acid ester and still more preferably is a diester of non-phthalic dicarboxylic acids;
(b) optionally a co-catalyst (Co), and
(c) optionally an external donor (ED).

It is preferred that the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate. Additionally or alternatively, the molar-ratio of co-catalyst (Co) to external donor (ED) [Co/ED] is 5 to 45.

If the heterophasic polypropylene composition according to this invention comprises also component (D), an alpha-nucleating agent, the heterophasic polypropylene composition is subsequently alpha nucleated.

The $\alpha$-nucleating agent and optionally further additives are added to the heterophasic polypropylene composition, which is collected from the final reactor of the series of reactors.

In case the heterophasic polypropylene composition is prepared by compounding of the fractions defined above, any additives may be added together or after said compounding step. Preferably, these additives are mixed into the composition prior to or during the extrusion process in a one-step compounding process. Alternatively, a master batch may be formulated, wherein the heterophasic polypropylene composition is first mixed with only some of the additives.

For mixing, a conventional compounding or blending apparatus, e.g. a Banbury mixer, a 2-roll rubber mill, Buss-co-kneader or a twin screw extruder may be used. The twin screw extruder may be co-rotating or counter-rotating, preferably co-rotating. Preferably, the composition will be prepared by blending the additives together with the polymeric material at a temperature, which is sufficiently high to soften and plasticize the polymer. The temperatures and pressures used in the operation of the extruder are known in the art. Typically the temperature may be selected from the range of 150 to 350°C. The pressure used for extrusion preferably is 50 to 500 bar. The polymer materials recovered from the extruder are usually in the form of pellets. These pellets are then preferably further processed, e.g. by injection moulding to generate articles and products of the inventive compositions.

In one embodiment of the present invention the heterophasic polypropylene composition obtained by the above described sequential multi-reactor polymerization process is visbroken, before any optional alpha nucleating step and either before adding optionally further additives or simultaneously with the additive addition.

According to this embodiment, the heterophasic polypropylene composition has been visbroken with a visbreaking ratio VB = $MFR_T/MFR_R$ of 1.2 to 5.0, wherein "$MFR_T$" is the $MFR_2$ (230°C/2.16 kg) of the heterophasic polypropylene composition after visbreaking, i.e. the total melt flow rate, and "$MFR_R$" is the initial total melt flow rate $MFR_2$ (230°C/2.16 kg) of the heterophasic polypropylene composition before visbreaking.

Preferably, the heterophasic polypropylene composition has been visbroken with a visbreaking ratio VB = $MFR_T/MFR_R$ of 1.4 to 3.0 and more preferably with a visbreaking ratio VB = $MFR_T/MFR_R$ of 1.5 to 2.5.

For visbreaking, the heterophasic polypropylene composition obtained by the above described sequential multi-reactor polymerization process is melt mixed with peroxide.

Preferred mixing devices suited for visbreaking are discontinuous and continuous kneaders, twin screw extruders and single screw extruders with special mixing sections and co-kneaders.

By visbreaking the heterophasic polypropylene composition with peroxides, the molar mass distribution (MWD) becomes narrower because the long molecular chains are more easily broken up or cut and the molar mass M, will decrease, corresponding to an $MFR_2$ increase. The $MFR_2$ increases with increase in the amount of peroxide which is used.

Such visbreaking may be carried out in any known manner, like by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Luperox DC).

Suitable amounts of peroxide to be employed in accordance with the present invention are in principle known to the skilled person and can easily be calculated on the basis of the amount of heterophasic polypropylene composition to be subjected to visbreaking, the initial total melt flow rate $MFR_R$ (230 °C/2.16 kg) value of the heterophasic polypropylene composition to be subjected to visbreaking and the desired target total melt flow rate $MFR_T$ (230 °C/2.16 kg) of the product to be obtained.

Accordingly, typical amounts of peroxide visbreaking agent are from 0.005 to 0.7 wt%, more preferably from 0.01 to 0.4 wt%, based on the total amount of polymers in the heterophasic polypropylene composition.

The peroxide may also be added in the form of a masterbatch.

In the sense of the present invention "masterbatch" means a concentrated premix of a propylene polymer with a free radical forming agent (peroxide). The peroxide masterbatch composition is provided in a concentration from 0.05 to 4.0 wt.%, preferably 0.10 to 3.0 wt.%, even more preferably 0.15 to 2.7 wt.%, yet more preferably 0.30 to 2.0 wt.%, based on the total weight of the propylene polymer composition.

The peroxide compound may preferably be contained in the peroxide masterbatch composition in a range of from 5 to 50 wt%, based on the total composition of the masterbatch.

Typically, visbreaking in accordance with the present invention is carried out in an extruder, so that under the suitable conditions an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

After visbreaking the heterophasic polypropylene composition according to this invention is preferably in the form of pellets or granules.

In the following the present invention is further illustrated by means of examples.

**EXPERIMENTAL PART**

**A. Measuring methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100\ *\ (mmmm\ /\ sum\ of\ all\ pentads)$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.\text{-}\% = 100 * (P_{21e} / P_{total})$$

**Comonomer determination by NMR spectroscopy**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E \text{ [wt\%]} = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**The xylene soluble fraction at room temperature (XCS, wt%)**

The amount of the polymer soluble in xylene is determined at 25 °C according to ISO 16152; 5th edition; 2005-07-01.

**Intrinsic viscosity (iV)**

The intrinsic viscosity (V) value increases with the molecular weight of a polymer. The iV values e.g. of the XCS were measured according to ISO 1628/1 in decalin at 135°C.

**DSC analysis, melting temperature ($T_m$), melting enthalpy ($H_m$), crystallization temperature ($T_c$) and crystallization enthalpy ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step respectively from the first heating step in case of the webs.

**The glass transition temperature Tg** is determined by dynamic mechanical thermal analysis according to ISO 6721-7. The measurements are done in torsion mode on compression moulded samples (40x10x1 mm$_3$) between -100 °C and +150 °C with a heating rate of 2 °C/min and a frequency of 1 Hz.

**$MFR_2$ (230 °C)** is measured according to ISO 1133 (230 °C, 2.16 kg load)

The melt flow rate is measured as the $MFR_2$ in accordance with ISO 1133 15 (230 °C, 2.16 kg load) for polypropylene and in accordance with ISO 1133 (190 °C, 2.16 kg load) for polyethylene and is indicated in g/10 min. The MFR is an indication of the flowability, and hence the processability, of the polymer. The higher the melt flow rate, the lower the viscosity of the polymer.

The $MFR_2$ of a fraction (B) produced in the presence of a fraction (A) is calculated using the measured values of $MFR_2$ of fraction (A) and the mixture received after producing fraction (B) ("final"):

$$Log\left(MFR_{final}\right) = weight\ fraction(A) * Log(MFR_A) + weight\ fraction(B) * Log(MFR_B)$$

**Charpy notched impact strength**

Charpy notched impact is measured according to ISO 179/1eA at +23°C and at -20°C using an injection moulded test specimen (80 x 10 x 4 mm) as produced according to ISO 1873.

**Flexural Modulus**

The flexural modulus was determined in 3-point-bending according to ISO 178 on 80x10x4 mm$^3$ test bars injection moulded at 23°C in line with EN ISO 1873-2.

**Puncture energy, maximum force and puncture deflection** is determined in the instrumented falling weight test according to ISO 6603-2 using injection moulded plaques of 60x60x2 mm and a test speed of 2.2 m/s, clamped, lubricated striker with 20 mm diameter. The reported puncture energy results from an integral of the failure energy curve measured at (60x60x2 mm).

**Top load test**

The top load force [N] is measured with the top load test according to DIN 55526 on empty 10 litre pails produced by injection moulding.

The pail (test specimen) is compressed at 23°C in an upright position between two parallel compression plates with constant speed, recording the resulting force and the distance (traverse path). A pre-force of -10 N is applied at 1 mm/min in order to achieve a rather linear force/deformation curve, followed by compression testing at 10 mm/min. The test is limited to the range of reversible deformation and is stopped after a deformation of 3.5 mm. 5 specimens are tested and the resulting maximum top load force is averaged.

**Drop height test**

Drop tests are done at room temperature (23°C) with water filled 10 litre pails produced by injection moulding and closed with a snap-fitting lid. The pails are lifted to certain height and then dropped down. If the pail does not collapse, the height is increased by 10 cm and the procedure is repeated. If the pail collapses, the height will be reduced by 10 cm. The drop height is calculated using the formula below:

$$drop\ height = \frac{\sum number\ of\ pails@certain\ height\ x\ height}{total\ number\ of\ tested\ pails}$$

**B. EXAMPLES**

The catalyst used in the polymerization process for the heterophasic polypropylene composition of the inventive examples (IE1 to IE3) was prepared as follows:

**Used chemicals:**

20 % solution in toluene of butyl ethyl magnesium (Mg(Bu)(Et), BEM), provided by Chemtura
2-ethylhexanol, provided by Amphochem
3-Butoxy-2-propanol - (DOWANOL™ PnB), provided by Dow
bis(2-ethylhexyl)citraconate, provided by SynphaBase
$TiCl_4$, provided by Millenium Chemicals
Toluene, provided by Aspokem
Viscoplex® 1-254, provided by Evonik
Heptane, provided by Chevron

*Preparation of a Mg alkoxy compound*

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45°C. After addition was completed, mixing (70 rpm) of the reaction mixture was continued at 60°C for 30 minutes. After cooling to room temperature 2.3 kg g of the donor bis(2-ethylhexyl)citraconate was added to the Mg-alkoxide solution keeping temperature below 25°C. Mixing was continued for 15 minutes under stirring (70 rpm).

*Preparation of solid catalyst component*

20.3 kg of $TiCl_4$ and 1.1 kg of toluene were added into a 20 l stainless steel reactor. Under 350 rpm mixing and keeping the temperature at 0 °C, 14.5 kg of the Mg alkoxy compound prepared in example 1 was added during 1.5 hours. 1.7 l of Viscoplex® 1-254 and 7.5 kg of heptane were added and after 1 hour mixing at 0°C the temperature of the formed emulsion was raised to 90°C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50°C and during the second wash to room temperature.
The thus obtained catalyst was used along with triethyl-aluminium (TEAL) as co-catalyst and di(cyclopentyl) dimethoxy silane (D-donor) as donor.

The molar ratio of co-catalyst (Co) to external donor (ED) [Co/ED] and the molar ratio of co-catalyst (Co) to titanium compound (TC) [Co/TC] are indicated in table 1.

Polymerization was performed in a Borstar pilot plant, comprising a prepolymerization reactor, a loop reactor and two gas phase reactors. The polymerization conditions are also indicated in table 1.

**Table 1: Polymerization of inventive examples**

| | | Ex.1 | Ex.2 | Ex.3 |
|---|---|---|---|---|
| **Prepoly** | | | | |
| Residence time | [h] | 0.37 | 0.36 | 0.35 |
| Temperature | [°C] | 30 | 30 | 30 |
| Co/ED ratio | [mol/mol] | 7.6 | 7.6 | 7.7 |
| Co/TC ratio | [mol/mol] | 144 | 166 | 178 |
| **Loop (R1)** | | | | |
| Residence time | [h] | 0.25 | 0.35 | 0.09 |
| Temperature | [°C] | 80 | 80 | 80 |
| H2/C3 ratio | [mol/kmol] | 25.4 | 11.5 | 30.5 |
| MFR2 | [g/10m]in | 310 | 103 | 348 |
| XCS | [wt%] | 2.6 | 2 | 2.5 |
| C2 content | [wt%] | 0 | 0 | 0 |
| split | [wt%] | 40 | 40 | 45 |
| **1st GPR (R2)** | | | | |
| Residence time | [h] | 3.1 | 2.9 | 3.1 |
| Temperature | [°C] | 80 | 80 | 80 |
| Pressure | [kPa] | 2700 | 2700 | 2700 |
| H2/C3 ratio | [mol/kmol] | 147.3 | 105.0 | 221.2 |
| MFR2 ($MFR_M$) | [g/10min] | 204 | 88 | 329 |
| XCS | [wt%] | 2.4 | 2.2 | 2.6 |
| C2 content | [wt%] | 0 | 0 | 0 |
| split | [wt%] | 40 | 40 | 39 |
| **2nd GPR (R3)** | | | | |
| Residence time | [h] | 1.2 | 1.2 | 1.1 |
| Temperature | [°C] | 75 | 75 | 75 |
| Pressure | [kPa] | 2500 | 2700 | 2500 |
| C2/C3 ratio | [mol/kmol] | 401.6 | 405.4 | 399.1 |
| H2/C2 ratio | [mol/kmol] | 158.8 | 159.9 | 167.3 |
| MFR2 ($MFR_T$) | [g/10min] | 80 | 40 | 100 |
| C2 content | [wt%] | 8.4 | 8.2 | 7.1 |
| split | [wt%] | 20 | 20 | 16 |
| MFR ratio $MFR_T/MFR_M$ | - | 0.39 | 0.45 | 0.30 |

For the Comparative Examples CE1 and CE2 the following heterophasic polypropylene polymers were prepared as described below:

### Catalyst preparation

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while

maintaining the temperature at said level. Then, the temperature of the slurry was increased slowly to 20°C. At this temperature, 0.02 mol of dioctylphthalate (DOP) was added to the slurry. After the addition of the phthalate, the temperature was raised to 135°C during 90 minutes and the slurry was allowed to stand for 60 minutes. Then, another 300 ml of TiCl$_4$ was added and the temperature was kept at 135°C for 120 minutes. After this, the catalyst was filtered from the liquid and washed six times with 300 ml heptane at 80°C. Then, the solid catalyst component was filtered and dried. Catalyst and its preparation concept is described in general e.g. in patent publications EP 491566, EP 591224 and EP 586390.

As external donor di(cyclopentyl) dimethoxy silane (Donor D) was used for CE2.

For Comparative Example 1 CE1 the catalyst was modified (VCH modification of the catalyst). 35 ml of mineral oil (Paraffinum Liquidum PL68) was added to a 125 ml stainless steel reactor followed by 0,82 g of triethyl aluminium (TEAL) and 0,33 g of dicyclopentyl dimethoxy silane (donor D) under inert conditions at room temperature. After 10 minutes 5,0 g of the catalyst prepared in 1a (Ti content 1,4 wt%) was added and after additionally 20 minutes 5,0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analysed and was found to be 200 ppm weight.

As external donor Diethylamino triethoxysilane was used for preparing CE1.

**Table 2: Polymerization of comparative examples**

| | | CE1 | CE2 |
|---|---|---|---|
| **Prepoly** | | | |
| Residence time | [h] | 0.25 | 0.25 |
| Temperature | [°C] | 30 | 30 |
| Co/ED ratio | [mol/mol] | 30 | 30 |
| Co/TC ratio | [mol/mol] | 200 | 200 |
| **Loop (R1)** | | | |
| Residence time | [h] | 0.6 | 0.6 |
| Temperature | [°C] | 75 | 75 |
| H2/C3 ratio | [mol/kmol] | 85 | 17.2 |
| MFR2 | [g/10m]in | 430 | 80 |
| XCS | [wt%] | 2.1 | 2.0 |
| C2 content | [wt%] | 0 | 0 |
| split | [wt%] | 56 | 49 |
| **1st GPR (R2)** | | | |
| Residence time | [h] | 1.0 | 1.0 |
| Temperature | [°C] | 80 | 80 |
| Pressure | [kPa] | 2500 | 2500 |
| H2/C3 ratio | [mol/kmol] | 80 | 17.2 |
| MFR2 | [g/10min] | 350 | 80 |
| XCS | [wt%] | 2.5 | 2.0 |
| C2 content | [wt%] | 0 | 0 |
| split | [wt%] | 25 | 35 |
| **2nd GPR (R3)** | | | |
| Residence time | [h] | 0.8 | 1.2 |
| Temperature | [°C] | 80 | 80 |
| Pressure | [kPa] | 2400 | 2400 |

(continued)

| 2nd GPR (R3) | | | |
|---|---|---|---|
| C2/C3 ratio | [mol/kmol] | 480 | 550 |
| H2/C2 ratio | [mol/kmol] | 210 | 150 |
| MFR2 | [g/10min] | 100 | 42 |
| C2 content | [wt%] | 6.6 | 6.4 |
| XCS | [wt%] | 14 | 16 |
| split | [wt%] | 19 | 16 |
| MFR ratio $MFR_T/MFR_M$ | - | 0.29 | 0.53 |

The properties of the products obtained from the individual reactors naturally are not measured on homogenized material but on reactor samples (spot samples). The properties of the final resin are measured on homogenized material, the MFR2 on pellets made thereof in an extrusion mixing process as described below.

The heterophasic polypropylenes of Inventive Example 2, as well as of Comparative Example 1 and Comparative Example 2 were visbroken.

For this the polymers have been first mixed with 400 ppm calcium Stearate (CAS No. 1592-23-0) and 1,000 ppm Irganox 1010 supplied by BASF AG, Germany (Pentaerythrityl-tetrakis(3-(3',5'-di-tert. butyl-4-hydroxyphenyl)-propionate, CAS No. 6683-19-8).

In a second step the heterophasic polypropylenes of Inventive Example 2, as well as of Comparative Example 2 have been visbroken by using a co-rotating twin-screw extruder at 200-230°C and using an appropriate amount of (tert.-butylperoxy)-2,5-dimethylhexane (Trigonox 101, distributed by Akzo Nobel, Netherlands) to achieve the target $MFR_2$.

All other polymers were mixed in a twin-screw extruder with 0.1 wt% of Pentaerythrityl-tetrakis(3-(3',5'-di-tert. butyl-4-hydroxyphenyl)-propionate, (CAS-no. 6683-19-8, trade name Irganox 1010) supplied by BASF AG, 0.1 wt% Tris (2,4-di-t-butylphenyl) phosphate (CAS-no. 31570-04-4, trade 10 name Irgafos 168) supplied by BASF AG, and 0.05 wt% Calcium stearate (CAS-no. 1592-23-0) supplied by Croda Polymer Additives.

The heterophasic polypropylene polymers of Example Ex.1 to Ex. 3 as well as polymers of Comparative Examples CE1 and CE2 were further nucleated by the addition of talc (Steamic T1 CA of Luzenac, having a cutoff particle size ($d_{95}$) of 6.2 μm.). The nucleating agent was added in the above described compounding step in an amount of 0.5 wt% talc based on the total amount of heterophasic polypropylene composition.

The polymer properties are listed in Table 3:

From the heterophasic polypropylene polymers of Example Ex.1 to Ex. 3 as well as polymers of Comparative Examples CE1 and CE2 pails for the drop height test and the top load force test have been produced by injection moulding on an Engel e-motion 2240/380T machine having a barrier screw with a diameter of 70mm at a melt temperature of 270°C. The back pressure setting was 45 bar and the injection time was 0.45 s. Cooling time and cycle time were adjusted to the material used by an art skilled person.

By this round pails of slightly conical shape having a top diameter of 290 mm outside, a top diameter of 266 mm inside, a bottom diameter of 239 mm and a height of 220 mm with rounded edges were produced. The pails had a drawn-in bottom of 7.2 mm depth as reinforcement and a rounded snap ring for the lid of 17 mm radius. The average wall thickness of the final products was 0.8 mm.

For the drop height test the pails were closed with a snap-fit lid. The lid was flat with a rib-reinforced rim of 21 mm height and an outer diameter of 292 mm.

**Table 3: Polymer Properties and pail properties**

| Properties | unit | Ex.1 | Ex.2 | Ex.3 | CE1 | CE2 |
|---|---|---|---|---|---|---|
| $MFR_2$ | [g/10min] | 80 | 75 | 100 | 100 | 75 |
| VB ratio | | - | 1.9 | - | - | 1.8 |
| <mmmm> NMR | [mol%] | 97.5 | 97.5 | 97.4 | 96.7 | 96.6 |
| Tm(PP, DSC) | [°C] | 164 | 164 | 163 | 165 | 165 |
| Hm(PP,DSC) | [J/gl | 83 | 82 | 84 | 92 | 106 |

(continued)

| Properties | unit | Ex.1 | Ex.2 | Ex.3 | CE1 | CE2 |
|---|---|---|---|---|---|---|
| Tm(PE, DSC) | [°C] | 118 | 118 | 118 | 118 | 118 |
| Hm(PE,DSC) | [J/g] | 0.1 | 0.1 | 0.1 | 0.2 | 0.1 |
| Tc(DSC) | [°C] | 123 | 123 | 124 | 131 | 124 |
| Tg(PP, DMA) | [°C] | -1.6 | 0.1 | -1.7 | 2.0 | 0.1 |
| Tg(EPR, DMA) | [°C] | -51 | -52 | -51 | -52 | -54 |
| XCS | [wt%] | 19 | 19.2 | 19.9 | 20 | 17 |
| C2(XCS, NMR) | [wt%] | 43.4 | 42.0 | 35.0 | 31.7 | 34.2 |
| iV(XCS) | [dl/g] | 3.2 | 2.9 | 3.0 | 3.1 | 2.3 |
| FM ISO 178 | [MPa] | 1298 | 1225 | 1233 | 1270 | 1226 |
| NIS ISO 179 1eA 23°C | [kJ/m$^2$] | 5.6 | 5.5 | 4.2 | 5.7 | 5.1 |
| NIS ISO 179 1eA - 20°C | [kJ/m$^2$] | 3.0 | 2.5 | 2.3 | 2.2 | 3.3 |
| Punct.Energy 23°C | [J] | 25.0 | 24.6 | 22.9 | 11.8 | 26.7 |
| Punct.Energy -20°C | [J] | 20.5 | 23.3 | 18.9 | 5.4 | 13.6 |
| *Relation* | | | | | | |
| Puncture Energy (23°C) > 80 - 20*iV(XCS) | | 16 | 22 | 20 | 18 | 34 |
| Pail properties | | | | | | |
| Drop height | [m] | 1.8 | 3.9 | 1.8 | 1.9 | 0.9 |
| Top load force | [N] | 2231 | 1929 | 2139 | 2010 | 2233 |
| In-equation (I) fulfilled | | yes | yes | yes | no | no |
| VB ratio visbreaking ratio FM Flexural Modulus n.m. not measured | | | | | | |

From Table 3 it can be clearly seen that the inventive heterophasic polypropylene compositions have an improved puncture respectively impact strength/stiffness balance over the comparative examples.

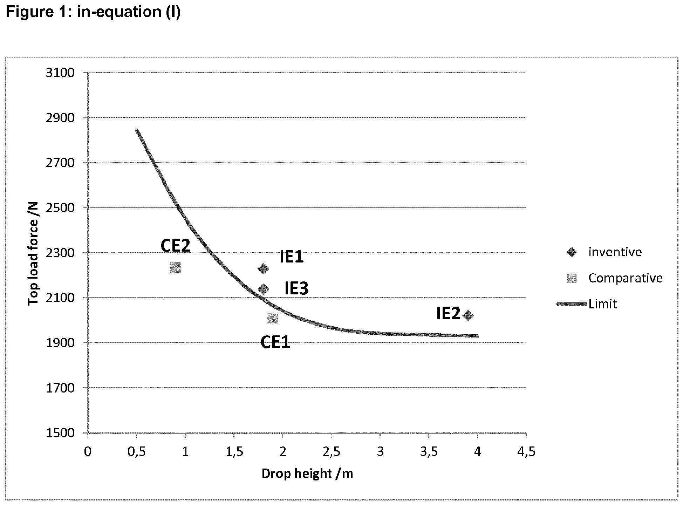

From Table 3 and Figure 1 it can be further seen that pails made from the heterophasic compositions of the Comparative Examples do not meet the requirements related to in-equation (I)

$$TL > 3400 - 1293 \times DH + 383 \times DH^2 - 38 \times DH^3,$$

wherein TL is the top load force [N] and DH is the drop height [m].

## Claims

1. Moulded article comprising a heterophasic polypropylene composition

   (A) 68 to 90 wt% of a crystalline isotactic propylene homopolymer matrix having a pentad concentration as determined by $^{13}$C-NMR spectroscopy of more than 96 mol% and a matrix melt flow rate ($MFR_M$) as determined at 230°C and 2.16 kg load according ISO 1133 in the range of 20 to 600 g/10min,
   (B) 10 to 32 wt% of a predominantly amorphous propylene copolymer with 28 to 50 wt% of ethylene and/or an $\alpha$-olefin with 4-10 carbon atoms, being present in the composition as dispersed particles, and
   (C) 0 to 5.0 wt% of a crystalline ethylene copolymer with an $\alpha$-olefin with 3-10 carbon atoms being present in the composition as inclusions of the dispersed particles of (B),

(D) 0 to 1.0 wt% of an alpha nucleating agent for the $\alpha$- and/or $\gamma$-phase of isotactic polypropylene,

said composition being further **characterized by** a total melt flow rate ($MFR_T$) as determined at 230°C and 2.16 kg load according ISO 1133 in the range of 6.0 to 200 g/10min, a fraction soluble in xylene (XCS) determined at 25°C according ISO 16152 in the range of 15 to 35 wt%, and ratio of $MFR_T$ /$MFR_M$ of ≤ 1.0,
whereby the sum of the percentage amounts of the individual components of the composition is equal to 100 percent, and
whereby the moulded article fulfils the following in-equation of formula (I)

$$TL > 3400 - 1293xDH + 383xDH^2 - 38xDH^3,$$

wherein

TL is the top load force [N] measured according to DIN 55526 on empty 10 litre pails produced by injection moulding and
DH is the drop height [m] measured according to the test method as described in the experimental part.

2. Moulded article according to claim 1, wherein the article and the heterophasic polypropylene composition is free of phthalic acid esters as well as their respective decomposition products.

3. Moulded article according to claim 1 or 2, wherein the moulded article is an injection moulded article.

4. Moulded article according to claim 3, wherein the moulded article is a thin wall packaging element.

5. Moulded article according to claim 4, wherein the thin wall packaging element is an open-top container with an overall volume of 1.0 to 25 litres with a wall thickness of equal or below 5.0 mm, optionally in combination with a close-fitting lid for said container.

6. Moulded article according to any of the preceding claims, showing a drop height at 23°C measured on water filled 10 litre pails produced by injection moulding and closed with a snap-fitting lid according to the test method as described in the experimental part of at least 1.0 m and top load force measured according to DIN 55526 on empty 10 litre pails produced by injection moulding of at least 1900 N, whereby the article fulfils in-equation (I) of claim 1.

7. Moulded article according to any of the preceding claims, wherein the propylene polymer composition has a crystalline polypropylene content with a melting point ($T_m$) from DSC analysis according ISO 11357 in the range of 160 to 170°C with an associated melting enthalpy ($H_m$) in the range of 70 to 100 J/g and optionally a crystalline polyethylene content with a melting point from DSC analysis according ISO 11357 in the range of 105 to 130°C with an associated melting enthalpy of less than 7.0 J/g.

8. Moulded article according to any of the preceding claims, wherein the propylene polymer composition has a total comonomer content defined as the sum of contents of ethylene and $\alpha$-olefins with 4-10 carbon atoms is in the range of 5.0 to 18.0 wt%.

9. Moulded article according to any of the preceding claims, wherein the propylene polymer composition is **characterized by** at least two glass transition points ($T_g$) as determined by dynamic-mechanical thermal analysis according ISO 6721-7, with one $T_g$ ($T_g(1)$) associated to the crystalline isotactic propylene homopolymer matrix being in the range of -4 to +4°C and another $T_g$ ($T_g(2)$) associated to the predominantly amorphous propylene copolymer being in the range of -65 to -45°C.

10. Moulded article according any of the preceding claims, wherein the propylene polymer composition has been produced by visbreaking a polymer composition from a sequential multi-reactor polymerization process having an initial total melt flow rate ($MFR_R$) as determined at 230°C and 2.16 kg load according ISO 1133 in the range of 5.0 to 100 g/10min in a melt mixing process with peroxide to a total melt flow rate ($MFR_T$) with a visbreaking ratio VB defined as

$$VB = MFR_T / MFR_R$$

and said VB being in the range of 1.2 to 5.0.

11. Moulded article according to any of claims 1 to 9, wherein the propylene polymer composition is a polymer composition from a sequential multi-reactor polymerization process free of peroxide decomposition products.

12. Moulded article according to any of the preceding claims, wherein the propylene polymer composition is produced in a sequential multi-reactor polymerization process in the presence of

   a) a Ziegler-Natta catalyst comprising compounds (TC) of a transition metal of Group 4 to 6 of IUPAC, a Group 2 metal compound and an internal donor, wherein said internal donor is a non-phthalic compound, preferably a non-phthalic acid ester;
   b) a co-catalyst (Co), and
   c) optionally an external donor (ED).

13. Moulded article according to claim 12, wherein said internal donor is selected from the group comprising malonates, maleates, succinates, citraconates, glutarates, cyclohexene-1,2-dicarboxylates and benzoates, and any derivatives and/or mixtures thereof.

14. Moulded article according to any of the preceding claims, wherein the propylene polymer composition is produced by polymerizing propylene in combination with ethylene and/or an $\alpha$-olefin with 4-10 carbon atoms in two or more reactors in the presence of

   a) a Ziegler-Natta catalyst comprising compounds (TC) of a transition metal of Group 4 to 6 of IUPAC, a Group 2 metal compound and an internal donor, wherein said internal donor is a non-phthalic compound, preferably a non-phthalic acid ester;
   b) a co-catalyst (Co), and
   c) optionally an external donor (ED)
   and optionally visbreaking the propylene polymer according to claim 10.

15. Moulded article according to claim 14, wherein the internal donor is selected from optionally substituted malonates, maleates, succinates, glutarates, cyclohexene-1,2-dicarboxylates, benzoates and derivatives and/or mixtures thereof, preferably the internal donor is a citraconate.


**Patentansprüche**

1. Form-Gegenstand, umfassend eine heterophasische Polypropylen-Zusammensetzung

   (A) 68 bis 90 Gew.-% einer kristallinen isotaktischen Propylen-Homopolymer-Matrix mit einer Pentaden-Konzentration, wie bestimmt durch $^{13}$C-NMR-Spektroskopie, von mehr als 96 Mol-% und einer Matrix-Schmelze-Fließ-Rate ($MFR_M$), wie bestimmt bei 230°C und 2,16 kg Last gemäß ISO 1133, im Bereich von 20 bis 600 g/10 min,
   (B) 10 bis 32 Gew.-% eines überwiegend amorphen Propylen-Copolymers mit 28 bis 50 Gew.-% an Ethylen und/oder einem $\alpha$-Olefin mit 4-10 Kohlenstoffatomen, das in der Zusammensetzung als dispergierte Teilchen vorliegt, und
   (C) 0 bis 5,0 Gew.-% eines kristallinen Ethylen-Copolymers mit einem $\alpha$-Olefin mit 3-10 Kohlenstoffatomen, das in der Zusammensetzung als Einschlüsse der dispergierten Teilchen von (B) vorhanden ist,
   (D) 0 bis 1,0 Gew.-% eines alpha-Keimbildungsmittels für die $\alpha$- und/oder $\gamma$-Phase von isotaktischem Polypropylen,

   wobei die Zusammensetzung weiterhin **gekennzeichnet ist durch** eine Gesamt-Schmelze-Fließ-Rate ($MFR_T$), wie bestimmt bei 230°C und 2,16 kg Last gemäß ISO 1133, im Bereich von 6,0 bis 200 g/10 min, eine in Xylol lösliche Fraktion (XCS), bestimmt bei 25°C gemäß ISO 16152, im Bereich von 15 bis 35 Gew.-% und ein Verhältnis von $MFR_T$ / $MFR_M$ von $\leq 1,0$,
   wobei die Summe der prozentualen Mengen der einzelnen Komponenten der Zusammensetzung gleich 100 Prozent ist, und
   wobei der Form-Gegenstand die nachstehende Ungleichung der Formel (I) erfüllt

$$TL > 3400 - 1293 \times DH + 383 \times DH^2 - 38 \times DH^3,$$

worin

TL die obere Belastungskraft [N], gemessen gemäß DIN 55526 an leeren 10-Liter-Eimern, die durch Spritzgießen hergestellt wurden, ist und
DH die Fallhöhe [m] ist, die gemäß dem Testverfahren, wie beschrieben im experimentellen Teil, gemessen wird.

2. Form-Gegenstand nach Anspruch 1, wobei der Gegenstand und die heterophasische Polypropylen-Zusammensetzung frei von Phthalsäureestern sowie deren jeweiligen Zersetzungsprodukten ist.

3. Form-Gegenstand nach Anspruch 1 oder 2, wobei der Form-Gegenstand ein Spritzguss-Form-Gegenstand ist.

4. Form-Gegenstand nach Anspruch 3, wobei der Form-Gegenstand ein dünnwandiges Verpackungselement ist.

5. Form-Gegenstand nach Anspruch 4, wobei das dünnwandige Verpackungselement ein oben offener Behälter mit einem Gesamtvolumen von 1,0 bis 25 Litern mit einer Wanddicke von gleich oder weniger als 5,0 mm ist, gegebenenfalls in Kombination mit einem eng anliegenden Deckel für den Behälter.

6. Form-Gegenstand nach einem der vorangehenden Ansprüche, der eine Fallhöhe bei 23°C, gemessen an wassergefüllten 10-Liter-Eimern, die durch Spritzgießen hergestellt und mit einem Schnappdeckel verschlossen wurden, gemäß dem Testverfahren, wie beschrieben im experimentellen Teil, von mindestens 1,0 m und einer oberen Belastungskraft, gemessen gemäß DIN 55526 an leeren 10-Liter-Eimern, die durch Spritzgießen hergestellt wurden, von mindestens 1900 N aufweist, wobei der Gegenstand die Ungleichung (I) von Anspruch 1 erfüllt.

7. Form-Gegenstand nach einem der vorangehenden Ansprüche, wobei die Propylen-Polymer-Zusammensetzung einen Gehalt an kristallinem Polypropylen mit einem Schmelzpunkt ($T_m$) aus der DSC-Analyse gemäß ISO 11357 im Bereich von 160 bis 170°C mit einer zugehörigen Schmelzenthalpie ($H_m$) im Bereich von 70 bis 100 J/g und gegebenenfalls einen Gehalt an kristallinem Polyethylen mit einem Schmelzpunkt aus der DSC-Analyse gemäß ISO 11357 im Bereich von 105 bis 130°C mit einer zugehörigen Schmelzenthalpie von weniger als 7,0 J/g aufweist.

8. Form-Gegenstand nach einem der vorangehenden Ansprüche, wobei die Propylen-Polymer-Zusammensetzung einen Gesamt-Comonomer-Gehalt, definiert als die Summe der Gehalte an Ethylen und $\alpha$-Olefinen mit 4-10 Kohlenstoffatomen, im Bereich von 5,0 bis 18,0 Gew.-% aufweist.

9. Form-Gegenstand nach einem der vorangehenden Ansprüche, wobei die Propylen-Polymer-Zusammensetzung durch mindestens zwei Glasübergangspunkte ($T_g$) gekennzeichnet ist, wie durch dynamisch-mechanische Thermoanalyse gemäß ISO 6721-7 bestimmt, wobei eine $T_g$ ($T_g(1)$), die mit der kristallinen isotaktischen Propylen-Homopolymer-Matrix verbunden ist, im Bereich von -4 bis +4°C liegt und eine andere $T_g$ ($T_g(2)$), die mit dem überwiegend amorphen Propylen-Copolymer verbunden ist, im Bereich von -65 bis -45°C liegt.

10. Form-Gegenstand nach einem der vorangehenden Ansprüche, wobei die Propylen-Polymer-Zusammensetzung durch Visbreaking einer Polymer-Zusammensetzung aus einem sequentiellen Multi-Reaktor-Polymerisations-Verfahren mit einer anfänglichen Gesamtschmelze-Fließ-Rate ($MFR_R$), wie bestimmt bei 230°C und einer Last von 2,16 kg gemäß ISO 1133, im Bereich von 5,0 bis 100 g/10 min in einem Schmelzmischverfahren mit Peroxid bis zu einer Gesamtschmelze-Fließ-Rate ($MFR_T$) hergestellt worden ist, wobei ein Visbreaking-Verhältnis VB definiert ist als

$$VB = MFR_T / MFR_R$$

und das VB im Bereich von 1,2 bis 5,0 liegt.

11. Form-Gegenstand nach einem der Ansprüche 1 bis 9, wobei die Propylen-Polymer-Zusammensetzung eine Polymer-Zusammensetzung aus einem sequentiellen Multi-Reaktor-Polymerisations-Verfahren ist, die frei von Peroxid-Zersetzungsprodukten ist.

**12.** Form-Gegenstand nach einem der vorangehenden Ansprüche, wobei die Propylen-Polymer-Zusammensetzung in einem sequentiellen Multi-Reaktor-Polymerisations-Verfahren hergestellt wird in Gegenwart von

a) einem Ziegler-Natta-Katalysator, der Verbindungen (TC) eines Übergangsmetalls der Gruppe 4 bis 6 der IUPAC, eine Verbindung eines Metalls der Gruppe 2 und einen inneren Donor umfasst, wobei der innere Donor eine Nicht-Phthalsäure-Verbindung, vorzugsweise ein Nicht-Phthalsäureester, ist;
b) einem Co-Katalysator (Co) und
c) gegebenenfalls einem äußeren Donor (ED).

**13.** Form-Gegenstand nach Anspruch 12, wobei der innere Donor aus der Gruppe ausgewählt ist, die Malonate, Maleate, Succinate, Citraconate, Glutarate, Cyclohexen-1,2-dicarboxylate und Benzoate und jegliche Derivate und/oder Gemische davon umfasst.

**14.** Form-Gegenstand nach einem der vorangehenden Ansprüche, wobei die Propylen-Polymer-Zusammensetzung durch Polymerisation von Propylen in Kombination mit Ethylen und/oder einem α-Olefin mit 4-10 Kohlenstoffatomen in zwei oder mehreren Reaktoren hergestellt wurde in Gegenwart von

a) einem Ziegler-Natta-Katalysator, der Verbindungen (TC) eines Übergangsmetalls der Gruppe 4 bis 6 der IUPAC, eine Verbindung eines Metalls der Gruppe 2 und einen inneren Donor umfasst, wobei der innere Donor eine Nicht-Phthalsäure-Verbindung, vorzugsweise ein Nicht-Phthalsäureester, ist;
b) einem Co-Katalysator (Co) und
c) gegebenenfalls einem äußeren Donor (ED)
und gegebenenfalls Visbreaking des Propylen-Polymers nach Anspruch 10.

**15.** Form-Gegenstand nach Anspruch 14, wobei der innere Donor ausgewählt ist aus gegebenenfalls substituierten Malonaten, Maleaten, Succinaten, Glutaraten, Cyclohexen-1,2-dicarboxylaten, Benzoaten und Derivaten und/oder Gemischen davon, wobei der innere Donor vorzugsweise ein Citraconat ist.

**Revendications**

**1.** Article moulé comprenant une composition de polypropylène hétérophasique

(A) 68 à 90 % en poids d'une matrice d'homopolymère de propylène isotactique cristallin ayant une concentration de pentade, telle que déterminée par spectroscopie RMN-$^{13}$C, supérieure à 96 %, et un indice de fluage de matrice (MFR$_M$), tel que déterminé à 230°C et sous une charge de 2,16 kg conformément à la norme ISO 1133, dans la plage de 20 à 600 g/10 min,
(B) 10 à 32 % en poids d'un copolymère de propylène majoritairement amorphe avec 28 à 50 % en poids d'éthylène et/ou d'une α-oléfine ayant 4 à 10 atomes de carbone, présent dans la composition sous la forme de particules dispersées, et
(C) 0 à 5,0 % en poids d'un copolymère d'éthylène cristallin avec une α-oléfine ayant 3 à 10 atomes de carbone, présent dans la composition sous la forme d'inclusions des particules dispersées de (B),
(D) 0 à 1,0 % en poids d'un agent d'alpha-nucléation pour les phases α et/ou γ de polypropylène isotactique,

ladite composition étant en outre **caractérisée par** un indice de fluage total (MFR$_T$), tel que déterminé à 230°C et sous une charge de 2,16 kg conformément à la norme ISO 1133, dans la plage de 6,0 à 200 g/10 min, une fraction soluble dans le xylène (XCS), déterminée à 25°C conformément à la norme ISO 16152, dans la plage de 15 à 35 % en poids, et un rapport MFR$_T$/MFR$_m$ ≤ 1,0,
moyennant quoi la somme des quantités en pourcentage des composants individuels de la composition est égale à 100 %, et
moyennant quoi l'article moulé satisfait à l'inégalité suivante de formule (I)

$$TL > 3400 - 1293 \times DH + 383 \times DH^2 - 38 \times DH^3,$$

dans laquelle

TL est la force de charge supérieure [N], mesurée conformément à la norme DIN 55526, sur des seaux de 10 litres vides produits par moulage par injection, et

DH est la hauteur de chute [m], mesurée conformément à la méthode de test telle que décrite dans la partie expérimentale.

2. Article moulé selon la revendication 1, dans lequel l'article et la composition de polypropylène hétérophasique sont exempts d'esters d'acide phtalique ainsi que de leurs produits de décomposition respectifs.

3. Article moulé selon la revendication 1 ou 2, dans lequel l'article moulé est un article moulé par injection.

4. Article moulé selon la revendication 3, dans lequel l'article moulé est un élément d'emballage à paroi mince.

5. Article moulé selon la revendication 4, dans lequel l'élément d'emballage à paroi mince est un récipient à partie supérieure ouverte ayant un volume global de 1,0 à 25 litres et une épaisseur de paroi égale ou inférieure à 5,0 mm, optionnellement en combinaison avec un couvercle bien ajusté pour ledit récipient.

6. Article moulé selon l'une quelconque des revendications précédentes, présentant une hauteur de chute à 23°C, mesurée sur des seaux de 10 litres remplis d'eau produits par moulage par injection et fermés avec un couvercle bien ajusté conformément à la méthode de test telle que décrite dans la partie expérimentale, d'au moins 1,0 m, et une force de charge supérieure, mesurée conformément à la norme DIN 55526 sur des seaux de 10 litres vides produits par moulage par injection, d'au moins 1900 N, moyennant quoi l'article satisfait à l'inégalité (I) de la revendication 1.

7. Article moulé selon l'une quelconque des revendications précédentes, dans lequel la composition de polymère de propylène a une teneur en polypropylène cristallin ayant un point de fusion ($T_m$), d'après une analyse DSC conformément à la norme ISO 11357, dans la plage de 160 à 170°C, avec une enthalpie de fusion associée ($H_m$) dans la plage de 70 à 100 J/g, et optionnellement une teneur en polyéthylène cristallin ayant un point de fusion, d'après une analyse DSC conformément à la norme ISO 11357, dans la plage de 105 à 130°C, avec une enthalpie de fusion associée inférieure à 7,0 J/g.

8. Article moulé selon l'une quelconque des revendications précédentes, dans lequel la composition de polymère de propylène a une teneur en comonomères totale, définie par la somme des teneurs en éthylène et $\alpha$-oléfines ayant 4 à 10 atomes de carbone, dans la plage de 5,0 à 18,0 % en poids.

9. Article moulé selon l'une quelconque des revendications précédentes, dans lequel la composition de polymère de propylène est **caractérisée par** au moins deux températures de transition vitreuse ($T_g$), tels que déterminés par analyse dynamique-mécanique thermique conformément à la norme ISO 6721-7, avec une $T_g$ ($T_g(1)$) associée à la matrice d'homopolymère de propylène isotactique cristallin qui est dans la plage de -4 à +4°C et une autre $T_g$ ($T_g(2)$) associée au copolymère de propylène majoritairement amorphe dans la plage de -65 à -45°C.

10. Article moulé selon l'une quelconque des revendications précédentes, dans lequel la composition de polymère de propylène a été produite par viscoréduction d'une composition de polymère provenant d'un procédé de polymérisation à réacteurs multiples en séquence ayant un indice de fluage total initial ($MFR_R$), tel que déterminé à 230°C et sous une charge de 2,16 kg conformément à la norme ISO 1133, dans la plage de 5,0 à 100 g/10 min dans un procédé de mélange à l'état fondu avec un peroxyde jusqu'à un indice de fluage total ($MFR_T$) avec un rapport de viscoréduction VB défini par

$$VB = MFR_T / MFR_R$$

et ledit VB étant dans la plage de 1,2 à 5,0.

11. Article moulé selon l'une quelconque des revendications 1 à 9, dans lequel la composition de polymère de propylène est une composition de polymère provenant d'un procédé de polymérisation à réacteurs multiples en séquence exempt de produits de décomposition de peroxyde.

12. Article moulé selon l'une quelconque des revendications précédentes, dans lequel la composition de polymère de propylène est produite dans un procédé de polymérisation à réacteurs multiples en séquence en présence de

  a) un catalyseur de Ziegler-Natta comprenant des composés (TC) d'un métal de transition des Groupes 4 à 6 de l'IUPAC, un composé d'un métal du Groupe 2 et un donneur interne, dans lequel ledit donneur interne est un composé non phtalique, de préférence un ester d'acide non phtalique ;
  b) un co-catalyseur (Co), et
  c) optionnellement un donneur externe (ED).

13. Article moulé selon la revendication 12, dans lequel ledit donneur interne est choisi dans le groupe comprenant les malonates, maléates, succinates, citraconates, glutarates, cyclohexène-1,2-dicarboxylates et benzoates, et n'importe lesquels de leurs dérivés et/ou mélanges.

14. Article moulé selon l'une quelconque des revendications précédentes, dans lequel la composition de polymère de propylène est produite par polymérisation de propylène en combinaison avec de l'éthylène et/ou une $\alpha$-oléfine ayant 4 à 10 atomes de carbone dans deux ou plus de deux réacteurs en présence de

  a) un catalyseur de Ziegler-Natta comprenant des composés (TC) d'un métal de transition des Groupes 4 à 6 de l'IUPAC, un composé d'un métal du Groupe 2 et un donneur interne, dans lequel ledit donneur interne est un composé non phtalique, de préférence un ester d'acide non phtalique ;
  b) un co-catalyseur (Co), et
  c) optionnellement un donneur externe (ED),
  et optionnellement viscoréduction du polymère de propylène selon la revendication 10.

15. Article moulé selon la revendication 14, dans lequel ledit donneur interne est choisi dans le groupe comprenant les malonates, maléates, succinates, glutarates, cyclohexène-1,2-dicarboxylates et benzoates éventuellement substitués, et n'importe lesquels de leurs dérivés et/ou mélanges, de préférence le donneur interne est un citraconate.

**Figure 1: in-equation (I)**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9924479 A
- WO 9924501 A
- EP 0887379 A
- WO 9212182 A
- WO 2004000899 A
- WO 2004111095 A
- WO 9924478 A
- WO 0068315 A
- WO 2012007430 A
- EP 2610271 A
- EP 261027 A
- EP 2610272 A
- EP 491566 A
- EP 591224 A
- EP 586390 A

**Non-patent literature cited in the description**

- *CHEMICAL ABSTRACTS,* 88-99-3
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **SINGH, G. ; KOTHARI, A. ; GUPTA, V.** *Polymer Testing,* 2009, vol. 28 5, 475
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W.-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- *CHEMICAL ABSTRACTS,* 1592-23-0
- *CHEMICAL ABSTRACTS,* 6683-19-8
- *CHEMICAL ABSTRACTS,* 31570-04-4